# EUROPÄISCHE PATENTSCHRIFT

(11) **EP 4 157 765 B1**
(45) Veröffentlichungstag und Bekanntmachung des Hinweises auf die Patenterteilung: **11.11.2026**
(21) Anmeldenummer: 21727799.5
(22) Anmeldetag: 18.05.2021
(51) Int. Cl.: B65G 47/08, B65G 47/71, B65G 57/24

(54) **ANLAGE UND VERFAHREN ZUM ZUSAMMENSTELLEN VON LAGEN AUS PACKMITTELN SOWIE ZUR BILDUNG VON TRANSPORT- UND LAGEREINHEITEN AUS ZUMINDEST EINER DIESER LAGEN**
SYSTEM AND METHOD FOR ASSEMBLING LAYERS OF PACKAGING MEANS AND FOR FORMING TRANSPORT AND STORAGE UNITS FROM AT LEAST ONE OF SAID LAYERS
INSTALLATION ET PROCÉDÉ POUR ASSEMBLER DES COUCHES À PARTIR DE MOYENS D'EMBALLAGE ET POUR FORMER DES UNITÉS DE TRANSPORT ET DE STOCKAGE À PARTIR D'AU MOINS UNE DE CES COUCHES

(30) Priorität: 29.05.2020 DE 102020114462
(43) Veröffentlichungstag der Anmeldung: 05.04.2023
(73) Patentinhaber: KHS GmbH, 44143 Dortmund (DE)
(72) Erfinder: HELFRICH, Stefan, 64646 Heppenheim (DE); MANN, Alexander, 55599 Eckelsheim (DE); RÜBSAAMEN, Martin, 67098 Bad Dürkheim (DE)
(86) Internationale Anmeldenummer: PCT/EP2021/063068
(87) Internationale Veröffentlichungsnummer: WO 2021/239503

(56) Entgegenhaltungen:
- DE-A1- 102018 219 082
- FR-A1- 2 607 481
- US-A- 3 219 203
- US-A- 5 733 100
- US-A1- 2017 107 003

## Beschreibung

Die Erfindung bezieht sich auf eine Anlage zum Zusammenstellen von Lagen aus Packmitteln sowie zur Bildung von Transport- und Lagereinheiten aus zumindest einer dieser Lagen sowie auf ein entsprechendes Verfahren zum Zusammenstellen von Lagen aus Packmitteln sowie zur Bildung von Transport- und Lagereinheiten aus zumindest einer dieser Lagen.

Bekannt ist es, mit einem Produkt (Füllgut) gefüllte Packmittel oder Verpackungseinheiten, beispielsweise Flaschen, kartonartige Behälter oder Verpackungen, insbesondere auch Dosen usw. in Umverpackungen, beispielsweise in Kartons, Trays, Getränkekisten usw. als Gebinde zu verpacken und in dieser Form in den Handel zu bringen.

Insbesondere im Falle von Getränkedosen werden Gebinde der genannten Art beispielsweise durch Bildung einzelner Lagen von Getränkedosen und Aufeinanderstapeln solcher Lagen zu einem Lagenstapel erzeugt, wobei solche Lagenstapel beispielsweise auf einer Palette agbelegt bzw. gebildet werden und diese fertiggestellten Paletten schließlich die Transport- und Auslieferungseinheit bilden. Die Lagenbildung und gegebenenfalls auch das Aufeinanderstapeln der Lagen erfolgt für gewöhnlich in Produktionslinien von Getränkeabfüllanlagen. Dabei können beispielsweise - quasi als einer der abschließenden Produktionsschritte in solchen Produktionslinien - Lagen aus gefüllten, vollen Behältern, insbesondere Dosen nach dem Abfüll-, und Verschließprozess gebildet und gegebenenfalls zur Erzeugung eines Gebindes übereinander gestapelt werden.

In einem derartigen Gebinde enthalten dann in der Regel sämtliche Packmittel ausschließlich ein und dasselbe Produkt, d.h. z.B. ein Getränk einer bestimmten Art oder Sorte (beispielsweise ausschließlich Saft oder Softdrink oder Bier usw.) und/oder ein und derselben Geschmacksrichtung. Gebinde, die Packmittel oder andere Verpackungseinheiten mit ein und demselben Produkt enthalten, werden als "sortenreine Gebinde" bezeichnet.

Vielfach werden vom Handel oder aber vom Endabnehmer nicht sortenreine und nachstehend als "Mischgebinde" bezeichnete Gebinde verlangt, die dann in ihrer Umverpackung Verpackungseinheiten oder Behälter mit jeweils unterschiedlichen Produkten enthalten, beispielsweise Packmittel mit Getränken (z.B. Softdrinks) unterschiedlicher Sorte und/oder unterschiedlicher Geschmacksrichtung (z.B. Cola-Getränke und Frucht-Limonaden usw.).

Zur Bildung einzelner Lagen von Packmitteln, nämlich zur Lagenbildung werden die einzelnen Packmittel zunächst einer Gruppierstation zugeführt und dort ausgerichtet, eventuell auch gedreht und/oder so positioniert, dass eine bestimmte Anzahl von einzelnen Packmittel oder auch Gebinden zu einer vollständigen Lage zusammengestellt werden können. Eine vollständige Lage weist hierbei etwa ein vorgegebenes Lagenbild bzw. eine vorgegebene Lagenordnung auf, das heißt eine vollständige Lage umfasst eine definierte Anzahl von Reihen einzelner Packmittel, wobei jede Reihe eine vorbestimmte Anzahl von Packmitteln aufweist und die Reihen zueinander in definierter Weise ausgerichtet sind. Insbesondere richtet sich das Lagenbild bzw. die Lagenordnung oder die Größe einer vollständigen Lage beispielsweise anwendungsbezogen nach der für ein jeweiliges abgefülltes Getränk vom Handel gewünschten Gebindegröße.

Nach der Lagenbildung werden die Packmittel in der Regel einlagig, nämlich als Lage einer Palettierstation oder Palettiermaschine zugeführt und übereinander lagenweise auf einer Transport- und Lagereinheit gestapelt, wobei zur Stabilisierung der einzelnen Lagen Zwischenlagen aus Karton oder Pappe als Platte auf den Packmittel der jeweiligen darunter liegenden Lage aufliegen. Eine mögliche Entpalettierung erfolgt in dazu umgekehrter Reihenfolge. Insbesondere die Kundenwünsche nach "Mischgebinden" macht es erforderlich, eine bereits aus einzelnen Lagen zusammengestellte Transport- und Lagereinheit wieder zu entpalettieren, um diese gemäß den Kundenwünschen neu mit Packmittel unterschiedlicher Sorte und/oder unterschiedlicher Geschmacksrichtung zusammenzustellen.

Werden dabei Zwischenlagen aus Karton oder Pappe als Platte zwischen einzelnen Lagen der Transport- und Lagereinheit verwendet, so gestaltet sich insbesondere das Überführen bzw. Überheben der in der Gruppierstation gebildeten Lagen auf die in der Palettierstation zusammengestellten Lagen auf der Transport- und Lagereinheit als technisch aufwändig und schwierig. Gleichermaßen aufwändig gestaltet sich auch das Entpalettieren der einzelnen Lagen mit dazwischen befindlichen Zwischenlagen aus Karton oder Pappe von der Transport- und Lagereinheit auf die Gruppierstation.

Palettierstationen oder -maschinen verfügen damit über eine beschränkte Leistungsfähigkeit (palettierte Lagen je Zeiteinheit), so dass sie bei real ausgeführten Palettieranlagen häufig der Faktor oder der Engpass sind, der die Leistung einer Gesamtanlage zum Herstellen von Stapeln aus Gebinden oder allgemein aus Gegenständen oder zum Palettieren von Gegenständen (Palettieranlage) beschränkt. Insbesondere die Lagenbildung, aber auch das "Lagenhandling" von teilweise fertiggestellten oder vollständigen Lagen in einer Gruppierstation und daran anschließenden Maschinenstationen erfolgt bekanntermaßen über Saugeinrichtungen, welche die Packmittel, insbesondere Dosen über vorgesehene Sauger aufnehmen, transferieren, zusammenstellen bzw. gruppieren und dadurch die Lagen bilden. Problematisch hierbei ist jedoch, dass die Sauger sehr anfällig gegen Schmutz und ausgetretene Flüssigkeiten sind, so dass es hierdurch bei der Gruppierung von Packmitteln, insbesondere bei der Lagenbildung bzw. beim "Lagenhandling" oft zu Störungen kommt, die sich insbesondere auch auf die vorgeschalteten Prozesse einer Produktionslinie nachteilig auswirken und zu Unterbrechungen führen.

Da die Packmittel bei einer Lagenbildung durch derartige, bekannte Saugeinrichtungen jeweils aufgenommen, angehoben und wieder abgesetzt werden müssen, und zwar auf sichere Weise und möglichst unter Vermeidung von Störereignissen, wie Umfallen oder Verrutschen der Packmittel, besteht bei dieser Art der Lagenbildung ein relativ hoher Zeitaufwand, der sich nachteilig auf die gesamte Produktionsleistung auswirkt. Gleichermaßen erweisen sich die bekannten Saugeinrichtungen zur Lagenbildung und zum "Lagenhandling" als insbesondere ungünstig für den Fall einer wie oberhalb erwähnten Entpalettierung zur Herstellung von "Mischgebinden" gemäß individueller Kundenwünsche.

Aus dem Stand der Technik, beispielsweise aus US 5,733,100 A, welches die Merkmale des Oberbegriffs des Anspruchs 1 offenbart, ist ferner eine

Palettieranlage bekannt, bei der Packmittel von zwei gegenüberliegenden Seiten her einem Gruppiertisch zugeführt werden. Dabei ist an beiden Seiten des Gruppiertisches jeweils eine Packmittelzuführung und eine Überschiebeeinheit vorgesehen, wobei die Packmittel über die Packmittelzuführung einspurig als Einzelreihe zugeführt und auf diese Weise für die Überschiebeeinheit zum Überschieben auf den Gruppiertisch bereitgestellt werden. Auf dem Gruppiertisch wird schließlich eine Lage für eine Palette gebildet.

Die Druckschriften FR 2 607 481 A1 und US 3 219 203 A offenbaren eine senkrecht zu einer generellen Prozessrichtung ausgerichtete Zuführung von Artikeln zu einem Palettiertisch bzw. zu einer Palette, wobei die Zuführung mehrreihig, jedoch nur einseitig, von einer Seite des Palettiertischs bzw. der Palette her, erfolgen kann.

Ausgehend hiervon ist es Aufgabe der Erfindung, eine Anlage zum Zusammenstellen von Lagen aus Packmitteln sowie zur Bildung von Transport- und Lagereinheiten aus zumindest einer dieser Lagen aufzuzeigen, die die Nachteile der aus dem Stand der Technik bekannten Systemen überwindet und bei der die Lagenbildung sowie das "Lagenhandling" verbessert und weniger störanfällig ist und die überdies eine schnellere und leistungsstärkere Zusammenstellung von Lagen aus Packmitteln sowie daraus gebildeten Transport- und Lagereinheiten erlaubt.

Diese Aufgabe wird durch eine Anlage zum Zusammenstellen von Lagen aus Packmitteln sowie zur Bildung von Transport- und Lagereinheiten aus zumindest einer dieser Lagen gemäß den Merkmalen des unabhängigen Patentanspruchs 1 gelöst. Ferner wird zur Lösung der Aufgabe ein Verfahren zum Zusammenstellen von Lagen aus Packmitteln sowie zur Bildung von Transport- und Lagereinheiten aus zumindest einer dieser Lagen gemäß den Merkmalen des unabhängigen Patentanspruchs 16 angegeben. Die Unteransprüche betreffen dabei besonders vorteilhafte Weiterbildungen der Erfindung.

Gemäß einem wesentlichen Aspekt stellt die Erfindung eine Anlage zum Zusammenstellen von Lagen aus Packmitteln sowie zur Bildung von Transport- und Lagereinheiten aus zumindest einer dieser Lagen zur Verfügung. Die Anlage weist zumindest eine Gruppierstation mit wenigstens einem eine Gruppierebene aufweisenden Gruppiertisch zum Anordnen und Gruppieren der Packmittel, und mit wenigstens einer Packmittelzuführung zum Zuführen der Packmittel zu dem Gruppiertisch in einer Förderrichtung auf. Die Packmittelzuführung umfasst zumindest zwei Reihenförderer zum Transportieren von jeweils mindestens einer Packmittelreihe, wobei die Reihenförderer in Förderrichtung beidseitig des Gruppiertisches angeordnet sind und dem Gruppiertisch die Packmittel von sich gegenüberliegenden ersten und zweiten Seiten her zuführen. Die Gruppierstation weist ferner eine Transfereinheit für den Transfer der Packmittel von den jeweiligen Reihenförderern zu dem Gruppiertisch auf, wobei auf jeder Seite zwischen den jeweiligen Reihenförderern und dem Gruppiertisch jeweils ein Überschubpufferbereich vorgesehen ist, über den die Transfereinheit die Packmittel in einer jeweiligen Schieberichtung vom jeweiligen Reihenförderer auf den Gruppiertisch überschiebt um die eine vorgegebene Lagenordnung aufweisende Lage aus Packmitteln zu bilden. Die Anlage weist ferner zumindest einen Lagenstapler auf, der die auf dem Gruppiertisch gebildete zumindest eine Lage aus Packmitteln unter Beibehaltung der Lagenordnung zur Bildung der Transport- und Lagereinheit auf eine in dem Lagenstapler bereitgestellte Platte überschiebt. Zumindest einer der Reihenförderer oder beide Reihenförderer ist/sind in Form eines Doppelreihenförderers vorgesehen, wobei jeder Doppelreihenförderer dazu ausgebildet ist die Packmittel in zwei nebeneinander laufenden Packmittelreihen in Förderrichtung zu transportieren.

Die Anlage gemäß der Erfindung bietet eine deutlich höhere Maschinenverfügbarkeit, Zeitersparnis und weniger Störungen, da die Lagenbildung auf dem Gruppiertisch aufgrund des Schiebens von Packmitteln schnell, zuverlässig und flexibel ist. Da im Überschubpufferbereich bereits parallel mit der Bildung einer neuen Lage begonnen werden kann, während noch eine zu erstellende bzw. erstellte Lage auf dem Gruppiertisch vervollständigt wird und aus dem Gruppiertisch ausfährt, kommt es zu deutlichem Zeitgewinn und besserer Auslastung. Auch können dadurch die Packmittel im Wesentlichen kontinuierlich zugeführt werden. Ein derartiger kontinuierlicher Packmittelzulauf bringt vorteilhaft eine höhere Leistung als diskontinuierliche Systeme. Außerdem kommt es durch den gleichmäßigeren Fluss zu weniger Störungen im vorgeschalteten Massenstrom.

Die Reihenförderer können auch für den Transport von drei oder mehr nebeneinander laufenden Reihen ausgebildet sein. Insbesondere, wenn beide Reihenförderer als Doppelreihenförderer oder gegebenenfalls als Dreifachreihenförderer ausgebildet sind, ergibt sich der Vorteil einer insbesondere effektiven, symmetrischen Packmittelzufuhr, bei der jeweils Doppelreihen oder Dreierreihen an den Gruppiertisch herangeführt werden, wodurch sich eine Leistungssteigerung sowie eine bessere Kontinuität der Zufuhr ergibt. Auch wirkt sich dies besonders günstig auf den vorgeschalteten Massenstrom der Packmittel aus, da hierüber eine kontinuierliche, gleichmäßige Entnahme aus dem Massenstrom gewährleistet wird.

Gemäß einer bevorzugten Ausführungsform weist jeder der Reihenförderer, insbesondere jeder Doppelreihenförderer eine Einteileinrichtung zum Einteilen bzw. Abteilen oder Abtrennen einer vorgegebenen, von der jeweiligen zu bildenden Lagenordnung abhängigen Anzahl der in Reihe hintereinander laufenden Packmittel vom Packmittelstrom auf.

Hierdurch können die in Förderrichtung transportierten Packmittel auslaufseitig an einem zu dem Überschubpufferbereich benachbarten Transferende der Reihenförderer zu einer Packmittelvorgruppe gruppiert werden, und zwar besonders vorteilhaft in der Weise, dass jede der eingeteilten bzw. abgetrennten Reihen die genaue Anzahl an Packmitteln enthält, die gemäß dem gewünschten Lagenbild bzw. der Lagenordnung der zu erstellenden Lage pro Reihe vorgesehen sind. Die Einteileinrichtung kann in Form von beweglichen, motorisch oder pneumatisch angetriebenen Anschlagelementen, Mitnehmerelementen oder Stoppern ausgebildet sein. Insbesondere können die entsprechenden Anschlagelemente, Mitnehmerelemente oder Stopper gesteuert bewegt werden und können sich nach Art von Führungsmitteln oder Abholern beispielsweise auch abschnittsweise in Förderrichtung mit der abgetrennten Anzahl von Packmitteln mitbewegen bzw. mit diesen "mitfahren".

Besonders bevorzugt weist die Einteileinrichtung dabei ferner wenigstens ein Ausrichtemittel zur Reihenausrichtung auf, wobei die Einteileinrichtung und das Ausrichtemittel dazu ausgebildet sind und derart zusammenwirken, dass im Falle mehrerer im Reihenförderer nebeneinander laufender Packmittelreihen in Abhängigkeit von der jeweiligen zu bildenden Lagenordnung die Packmittelreihen in jeder Packmittelvorgruppe versetzt zueinander angeordnet werden. Das vorauseilende Ende einer Packmittelvorgruppe weist dabei einen Versatz auf und die Packmittel einer Reihe stehen quasi "auf Lücke" zur benachbarten Reihe. Dies wird vorliegend auch als wabenähnliche Anordnung der Packmittel verstanden oder als "Verwabung" der Reihen. Dadurch ergibt sich vorteilhaft eine insbesondere platzsparende sich selbst stabilisierende Anordnung benachbarter Reihen, welche somit auch für die gesamte Lage zutrifft.

Gemäß einer bevorzugten Ausführungsvariante weist die Transfereinheit ein führungsschienenartiges Querträgerelement auf, das oberhalb der Gruppierebene beabstandet zu dieser angeordnet ist und sich in Bezug auf die Förderrichtung quer über den Gruppiertisch erstreckt. Dabei sind wenigstens eine an dem Querträgerelement beweglich gelagerte und im Wesentlichen der ersten Seite des Gruppiertisches zugeordnete erste antreibbare Schieberfunktionseinheit sowie eine an dem Querträgerelement beweglich gelagerte und im Wesentlichen der zweiten Seite des Gruppiertisches zugeordnete zweite antreibbare Schieberfunktionseinheit vorgesehen.

Besondere Vorteile ergeben sich dadurch, dass jede Schieberfunktionseinheit jeweils zumindest ein Paar zusammenwirkender hub- und senkbeweglicher Schieberelemente aufweist, wobei jedes Schieberelement angetrieben ist und zusätzlich zur Hub- und Senkbeweglichkeit in jeweiligen Schieberichtungen zumindest abschnittsweise entlang des Querträgerelementes verfahrbar ist, und dadurch in horizontaler Richtung mittels lateraler Bewegung quer über den Gruppiertisch bewegt werden kann. Vorzugsweise ist dabei jedes Schieberelement einzeln und unabhängig angetrieben, wobei jedes Schieberelement sowohl mittels Hub-Senk-Bewegung in vertikaler Richtung wie auch mittels lateraler Verfahrbewegung in horizontaler Richtung einzeln und unabhängig bewegbar ist.

Bevorzugt sind die Schieberelemente gesteuert bewegbar, wobei die Anlage eine Steuereinheit umfasst und die Bewegung der Schieberelemente mittels der Steuereinheit individuell gesteuert ist. Durch die individuelle, unabhängige Ansteuerung ist die Flexibilität und/oder Geschwindigkeit bei der Lagenbildung zusätzlich erhöht. Insbesondere werden in einer Steuereinheit der Anlage, vorzugsweise einer zentralen Steuereinheit die entsprechenden Steuerroutinen hinterlegt, die einzeln, individuell und unabhängig für jedes Schieberelement je nach Anwendungsfall abgerufen und angewandt werden können.

Besondere Vorteile ergeben sich auch darüber, dass jedes der Schieberelemente einen eigenen Antrieb aufweist, insbesondere einen motorischen und/oder pneumatischen Antrieb. Beispielsweise ist jedem Schieberelement für die laterale Verfahrbewegung in horizontaler Richtung entlang des Querträgerelementes ein eigener motorischer Antrieb, insbesondere ein Servomotor zugeordnet und für die Hub-Senk-Bewegung in vertikaler Richtung ist jedem Schieberelement eine Pneumatikzylindereinheit zugeordnet, die vorzugsweise jeweils zwei Pneumatikzylinder umfasst. Die horizontale Verfahrbewegung entlang des Querträgerelementes ist vorteilhaft stufenlos steuerbar, so dass die Schieberelemente zumindest über einen gewissen Bereich des Gruppiertisches queren können und dabei in dieser Querungsbewegung beliebig positionierbar sind. Die Hub-Senk-Bewegung ist beispielsweise stufenartig, so dass die Schieberelemente eine definierte angehobene und eine definierte abgesenkte Position einnehmen können.

Weiterhin bevorzugt ist der Überschubpufferbereich durch ein Überschubblech mit einer ebenen und glatten Oberseite gebildet, wobei die Oberseite des Überschubbleches eine im Wesentlichen mit der Gruppierebene des Gruppiertisches zusammenfallende Schiebeebene definiert.

Bevorzugt sind für den Überschub der vollständigen Lage vom Gruppiertisch auf die in dem Lagenstapler bereitgestellte Platte Führungs- und Überschubmittel vorgesehen, wobei die Führungs- und Überschubmittel insbesondere käfig- oder rahmenartige Führungen aufweisen, die zur Sicherung der Lagenordnung während des Überschubs ausgebildet sind und eine vollständige Lage von oben her sichernd in Eingriff nehmen.

Der Lagenstapler weist bevorzugt eine Hubgabel auf, welche die jeweilige Platte zur Aufnahme der Lage und damit zur Bildung der Transport- und Lagereinheit bereitstellt. Insbesondere ist die Hubgabel dazu ausgebildet, formstabile Platten, beispielsweise Multiplex-Platten, insbesondere Siebdruckplatten bereitzustellen. Insbesondere ist die Hubgabel zum Tragen und Halten von Platten ausgelegt, die vorzugsweise eine planare Oberseite aufweisen, wobei an der Unterseite eines Grundkörpers der Platten zumindest teilumfänglich ein insbesondere als ein von der Unterseite vorspringender Halterahmen ausgebildetes Halteelement vorgesehen ist.

Der Lagenstapler umfasst vorzugsweise auch eine Höhenpositionierungseinrichtung zur exakten Höhenpositionierung der bereitgestellten Platte, wobei die Höhenpositionierungseinrichtung sicherstellt dass eine Oberseite der Platte in der Gruppierebene des Gruppiertisches ausgerichtet ist und die Oberseite der Platte dadurch eine Aufschiebeebene zum Auf- und/oder Abschieben der Packmittel bzw. der Lagen ausbildet, die mit der Gruppierebene in eine gemeinsame Ebene zusammenfällt. Dadurch wird das Überschieben der vollständigen Lage auf die Platte erleichtert. Vorzugsweise ist an der Oberseite der Platte dabei zusätzlich ein Gleitbelag vorgesehen.

Im Bereich des Lagenstaplers kann vorteilhaft ferner eine Zentriervorrichtung zur Zentrierung und exakten horizontalen Positionierung der bereitgestellten Platte vorgesehen sein, um insbesondere die Bildung der Transport- und Lagereinheit präzise ausführen zu können.

Der Lagenstapler verfügt bevorzugt über eine Umsetzvorrichtung für die Platten, wobei die Umsetzvorrichtung vorzugsweise dazu ausgebildet ist, eine Platte von einem dem Lagenstapler zugeordneten Stapel von Platten aufzunehmen und oberseitig auf einer Lage einer im Lagenstapler in Bildung befindlichen Transport- und Lagereinheit abzusetzen. Ebenso bevorzugt ist die Umsetzvorrichtung alternativ oder additiv dazu ausgebildet, eine Platte von einer Lage einer im Lagenstapler befindlichen Transport- und Lagereinheit aufzunehmen und auf eine dem Lagenstapler zugeordnete Palette oder einem dem Lagenstapler zugeordneten Stapel von Platten abzusetzen.

Auf diese Weise können mit der Anlage Transport- und Lagereinheiten gebildet werden, die aus mehreren übereinander gestapelten Lagen bestehen, die jeweils auf einer Platte gelagert sind. In ebensolcher Weise können mit der Anlage derartige aus mehreren übereinander gestapelten Lagen bestehende Transport- und Lagereinheiten "aufgelöst" und die in den Transport- und Lagereinheiten verwendeten Platten von der jeweiligen obersten Lage aus Packmitteln zu Zwecken der Aufbewahrung, des Transports, der Lagerung und Wiederverwendung aufeinandergestapelt werden. Somit ist die Anlage insbesondere dazu ausgelegt, sowohl für eine Palettierung als auch für eine Entpalettierung eingesetzt zu werden.

Die Erfindung betrifft auch ein Verfahren zum Zusammenstellen von Lagen aus Packmitteln sowie zur Bildung von Transport- und Lagereinheiten aus zumindest einer dieser Lagen, bei dem in einer Gruppierstation einer Anlage auf einem eine Gruppierebene aufweisenden Gruppiertisch Packmittel angeordnet und gruppiert werden. Die Packmittel werden mittels einer Packmittelzuführung in einer Förderrichtung zu dem Gruppiertisch gefördert, wobei die Packmittelzuführung zwei beidseitig des Gruppiertisches angeordnete Reihenförderer zum Transportieren von jeweils mindestens einer Packmittelreihe umfasst, wobei zumindest einer der Reihenförderer oder beide Reihenförderer in Form eines Doppelreihenförderers vorgesehen ist/sind, wobei die Packmittel von dem Doppelreihenförderer in zwei nebeneinander laufenden Packmittelreihen in Förderrichtung transportiert werden, wobei die Reihenförderer parallel zueinander sowie parallel zur ersten und zweiten Seite des Gruppiertisches angeordnet und ihrer Länge nach in Förderrichtung orientiert sind und die Packmittel dem Gruppiertisch von sich gegenüberliegenden ersten und zweiten Seiten her zugeführt werden. Die Packmittel werden mittels einer vorgesehenen Transfereinheit von den jeweiligen Reihenförderern über jeweils zwischen den Reihenförderern und dem Gruppiertisch vorgesehene Überschubpufferbereiche auf den Gruppiertisch übergeschoben um die eine vorgegebene Lagenordnung aufweisende Lage aus Packmitteln zu bilden. Die vollständige Lage aus Packmitteln wird unter Beibehaltung der Lagenordnung zur Bildung der Transport- und Lagereinheit auf eine in einem vorgesehenen Lagenstapler bereitgestellte Platte übergeschoben.

Bevorzugt werden die Packmittel einer jeweiligen zu bildenden Lage sukzessive und gruppenweise in mehreren Transferschritten von den Reihenförderern auf den Gruppiertisch übergeschoben, und zwar in gesteuerter Weise. Die Lagenbildung kann in verschiedensten Mustern, nämlich mit verschiedensten Untergruppierungen von Packmitteln, verschiedenen Paketbildungen usw. erfolgen, so dass hierdurch eine große Variationsbreite und Flexibilität für die Lagenbildung bereit steht.

Die Packmittel werden gemäß einer bevorzugten Ausführungsvariante durch mehrere individuell und einzeln angesteuerte sowie individuell und einzeln angetriebene Schieberelemente von den Reihenförderern auf den Gruppiertisch übergeschoben. Durch die individuelle, unabhängige Ansteuerung sowie ebenso durch den individuellen, unabhängigen Antrieb der mehreren Schieberelemente ist die Flexibilität und/oder Geschwindigkeit bei der Lagenbildung zusätzlich erhöht. Insbesondere werden in einer Steuereinheit der Anlage, vorzugsweise einer zentralen Steuereinheit die entsprechenden Steuerroutinen hinterlegt, die einzeln, individuell und unabhängig für jedes Schieberelement je nach Anwendungsfall abgerufen und angewandt werden können.

Bevorzugt werden die Packmittel dem Gruppiertisch symmetrisch zugeführt, wobei die Packmittel vorzugsweise an jeder Seite als Doppelreihe zugeführt werden. Selbstverständlich sind andere Zuführungen möglich, beispielsweise in Dreierreihen.

Gemäß einer bevorzugten Ausführungsvariante werden die Packmittel an einem dem Gruppiertisch zugewandten Transferende der Reihenförderer zu einer Packmittelvorgruppe vorgruppiert.

Ebenso bevorzugt werden bereits während der Fertigstellung einer ersten vollständigen Lage auf dem Gruppiertisch die Packmittel für eine weitere, neue Lage in die jeweiligen Überschubpufferbereiche übergeschoben und dort vorzugsweise zu Teillagen zusammengestellt. Dadurch ergibt sich neben einer merklichen Zeiteinsparung zusätzlich eine bessere Maschinenauslastung.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: stark vereinfacht und nur beispielhaft skizziert in einer Draufsicht eine Ausführungsvariante einer Anlage zum Zusammenstellen von Lagen aus Packmitteln sowie zur Bildung von Transport- und Lagereinheiten aus zumindest einer dieser Lagen gemäß der Erfindung und eine in der Anlage gebildete Transport- und Lagereinheit,
- Fig. 2: eine grob schematische und stark vereinfachte Ansicht einer beispielhaften Ausführungsvariante der Anlage gemäß der Erfindung, bei der die für das Überschieben der Packmittel vorgesehenen Schieberfunktionseinheiten in einer von vielen möglichen Stellungen dargestellt sind,
- Fig. 3: eine Ansicht der Anlage wie in Figur 2, wobei die für das Überschieben der Packmittel vorgesehenen Schieberfunktionseinheiten in einer weiteren möglichen Stellung dargestellt sind und
- Fig.4: anhand eines beispielhaften diagrammartigen Schemas eine mögliche Variante von Schrittfolgen für die Lagenbildung.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind. Auch ist die Erfindung in den Figuren nur als schematische Ansicht zur Erläuterung der Arbeitsweise dargestellt. Insbesondere dienen die Darstellungen in den Figuren nur der Erläuterung des grundlegenden Prinzips der Erfindung. Aus Gründen der Übersichtlichkeit ist darauf verzichtet worden, alle Bestandteile der Vorrichtung zu zeigen.

Die in den Figuren allgemein mit 1 bezeichnete Anlage dient zum Zusammenstellen von Lagen LA aus Packmitteln 2 sowie zur Bildung von Transport- und Lagereinheiten 100 aus zumindest einer dieser Lagen LA. Insbesondere handelt es sich bei der beschriebenen und in den Figuren dargestellten Anlage 1 um eine Anordnung bzw. ein System aus Vorrichtungen bzw. Maschinen, die zum Verpacken und/oder Palettieren von Packmitteln 2 bzw. zur Erstellung von lager- und transportfähigen Einheiten oder Gebinden geeignet sind. Im weitesten Sinne kann die Anlage 1 daher auch als Verpackungs- und/oder Palettieranlage verstanden werden.

Die beispielhafte Anlage 1 ist speziell für die Behandlung bzw. Verarbeitung von als Flüssigkeitsbehältern ausgebildeten Packmitteln 2 geeignet, insbesondere für Getränkebehälter wie z.B. Getränkedosen, so dass die Anlage 1 vorzugsweise in der Getränkeindustrie eingesetzt werden kann und beispielsweise auch Teil einer Getränkeabfüllanlage sein kann. Insbesondere können mit der vorliegend beschriebenen Anlage 1 fertig abgefüllte bzw. befüllte Getränkedosen 2 zu Lagen LA zusammengestellt und aus diesen Lagen LA von befüllten Getränkedosen schließlich Transport- und Lagereinheiten 100 gebildet werden. Im Sinne der vorliegenden Erfindung werden die gefüllten Getränkedosen auch als Volldosen bezeichnet, so dass das Zusammenstellen von Lagen LA und die Bildung von Transport- und Lagereinheiten 100 vorliegend auch als Volldosenpalettierung verstanden werden kann.

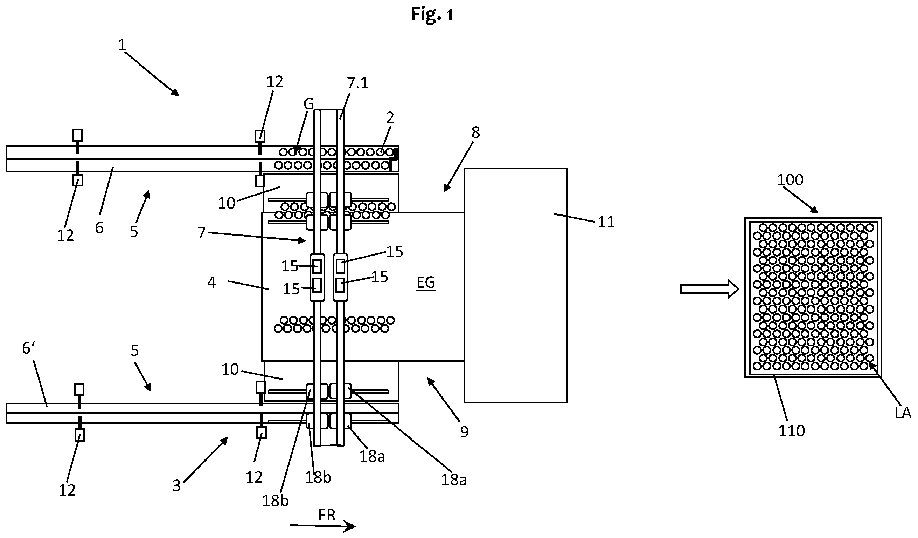

In der Figur 1 ist eine beispielhafte Ausführungsvariante einer Anlage 1 grob schematisch und stark vereinfacht in einer Draufsicht skizziert. Die Anlage 1 weist eine Gruppierstation 3 und einen der Gruppierstation 3 in Förderrichtung FR nachgeschalteten Lagenstapler 11 auf. In der Gruppierstation 3 werden die zugeführten Packmittel 2 im Wesentlichen zu den gewünschten Lagen LA zusammengestellt und an den Lagenstapler 11 übergeben, wo die zusammengestellten Lagen LA unter Bildung der Transport- und Lagereinheit 100 auf speziell vorgesehene, im Lagenstapler 11 bereitgehaltene Platten 110 aufgeschoben werden.

Die Gruppierstation 3 der beispielhaft in Figur 1 dargestellten Anlage 1 umfasst einen Gruppiertisch 4, der mit seiner Oberseite bzw. mit seiner oberen Oberfläche eine Gruppierebene EG definiert und mit zumindest einem Teilabschnitt dieser Oberseite einen Vorbereitungsplatz bzw. eine Sammelzone zum Anordnen und Gruppieren der Packmittel 2 bildet. Der Gruppiertisch 4 ist im dargestellten Beispiel im Wesentlichen rechteckförmig ausgebildet und erstreckt sich seiner Länge nach entlang der Förderrichtung FR, wobei sich gegenüberliegende, in Förderrichtung FR orientierte Längsseiten eine erste und zweite Seite 8, 9 des Gruppiertisches 4 bilden.

Die Gruppierstation 3 umfasst ferner eine Packmittelzuführung 5 zum Zuführen der Packmittel 2 zu dem Gruppiertisch 4, wobei die Packmittelzuführung 5 im dargestellten Beispiel der Figur 1 zwei Dopplereihenförderer 6, 6' zum Transportieren von jeweils zwei nebeneinander laufenden Packmittelreihen umfasst. Die Doppelreihenförderer 6, 6' sind in Förderrichtung FR beidseitig des Gruppiertisches 4 angeordnet, das heißt der erste Doppelreihenförderer 6 verläuft an der ersten Seite 8 des Gruppiertisches 4 und der zweite Doppelreihenförderer 6' verläuft an der zweiten Seite 9 des Gruppiertisches 4. Über diese beidseitige Anordnung der Doppelreihenförderer 6, 6' erfolgt die Zuführung der Packmittel 2 zu dem Gruppiertisch 4 von zwei sich gegenüberliegenden Seiten 8, 9 her auf symmetrische Weise. Die beiden Doppelreihenförderer 6, 6' sind gemäß der Erfindung parallel zueinander sowie parallel zur ersten und zweiten Seite 8, 9 des Gruppiertisches 4 angeordnet und sind ihrer Länge nach in Förderrichtung FR orientiert. In der Figur 1 nicht dargestellt, ist einlaufseitig an einem dem Gruppiertisch 4 abgewandten Einlaufende der Doppelreihenförderer 6, 6' ein Packmittelzulauf vorgesehen, der die Packmittel 2 im Massenstrom, nämlich ungeordnet im Pulk den Doppelreihenförderern 6, 6' zuführt. Aus dem Massenstrom des Packmittelzulaufs gehen die Packmittel 2 an einer Übergabe an die Doppelreihenförderer 6, 6' in bekannter Weise in einen Linien- oder Reihentransport über.

Die Doppelreihenförderer 6, 6', welche die Packmittel 2, insbesondere die gefüllten Getränkedosen stehend transportieren, bilden für diesen stehenden Transport der Getränkedosen 2 eine Transportebene, die im Wesentlichen auf selber Höhe mit der Gruppierebene EG des Gruppiertisches 4 liegt und mit dieser in einer gemeinsamen Ebene zusammenfällt. Die sich von ihrem Einlaufende bis zu einem auslaufseitig angeordneten Transferende erstreckenden Doppelreihenförderer 6, 6' sind im Wesentlichen in Förderrichtung FR dem Gruppiertisch 4 vorgelagert, überlappen jedoch - bezogen auf die Förderrichtung FR - mit dem Bereich ihres Transferendes abschnittsweise mit dem Gruppiertisch 4.

Jeder Doppelreihenförderer 6, 6' weist eine Einteileinrichtung 12 zum Abteilen bzw. Abtrennen einer vorgegebenen, von der jeweiligen zu bildenden Lagenordnung abhängigen Anzahl der in Reihe hintereinander laufenden Packmittel 2 vom Packmittelstrom bzw. von der jeweiligen Packmittelreihe auf, so dass die in Förderrichtung FR transportierten Packmittel 2 mittels der Doppelreihenförderer 6, 6' auslaufseitig am Transferende zu einer Packmittelvorgruppe G gruppiert werden. Bei der Einteileinrichtung 12 ist ferner ein Ausrichtemittel zur Reihenausrichtung vorgesehen, das in jeder Packmittelvorgruppe G die beiden Packmittelreihen jeder Doppelreihe in Abhängigkeit von der zu bildenden Lagenordnung zueinander versetzt anordnet, so dass das vorauseilende Ende der Packmittelvorgruppe G gestuft bzw. mit Versatz ausgebildet ist und die Packmittel 2 der einen Reihe quasi auf Lücke zu den Packmitteln 2 der benachbarten Reihe stehen. An den zum Gruppiertisch 4 überlappend angeordneten Bereichen der Transferenden der jeweiligen Doppelreihenförderer 6, 6' stehen somit die vorgruppierten Packmittelvorgruppen G bereit für den Überschub auf den Gruppiertisch 4.

In diesen Überlappungsbereichen ist auf jeder Seite 8, 9 des Gruppiertisches 4 zwischen dem jeweiligen Doppelreihenförderer 6, 6' und dem Gruppiertisch 4 jeweils ein Überschubpufferbereich 10 vorgesehen, über den die Packmittel 2, insbesondere die Packmittelvorgruppen G vom jeweiligen Transferende der Doppelreihenförderer 6, 6' in einer jeweiligen Schieberichtung SR1, SR2 auf den Gruppiertisch 4 übergeschoben werden. Vorzugsweise ist der Überschubpufferbereich 10 durch ein Überschubblech mit einer ebenen und glatten Oberseite gebildet, wobei die Oberseite des Überschubbleches 10 eine im Wesentlichen mit der Gruppierebene EG sowie mit der Transportebene zusammenfallende Schiebeebene definiert. Eine jeweilige Breite der Überschubpufferbereiche 10 beträgt vorzugsweise mindestens etwa dem vierfachen Durchmesser der zu bearbeitenden Packmittel 2, so dass der Überschubpufferbereich 10 beispielsweise zwei, aus jeweils einer Doppelreihe bestehende Packmittelvorgruppen G fassen kann.

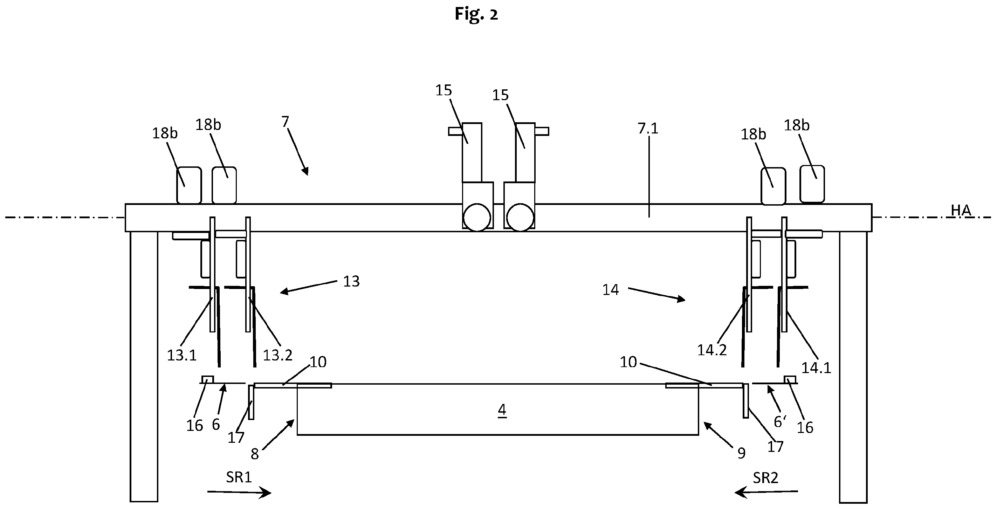

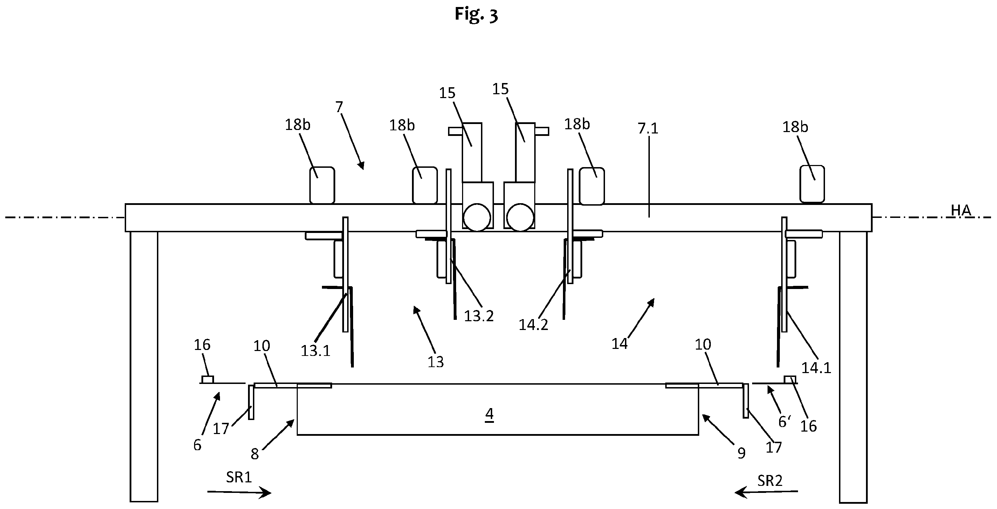

Für die Überschubfunktion bzw. für den Transfer der Packmittel 2 bzw. Packmittelvorgruppen G von den jeweiligen Reihenförderern 6, 6' zu dem Gruppiertisch 4 weist die Gruppierstation 3 ferner eine Transfereinheit 7 auf, deren Aufbau und Funktion im Folgenden mehr im Detail im Zusammenhang mit den Figuren 2 und 3 erläutert wird. Die Figuren 2 und 3 zeigen dabei eine grob schematische und stark vereinfachte Ansicht einer beispielhaften Ausführungsvariante der Anlage 1, bei der die für das Überschieben der Packmittel 2 vorgesehene Transfereinheit 7 ersichtlich ist. Wie bereits erläutert, schiebt die Transfereinheit 7 die Packmittel 2 vom jeweiligen Reihenförderer 6, 6' in einer jeweiligen Schieberichtung SR1, SR2 auf den Gruppiertisch 4, um hier die Lage LA aus Packmitteln 2 zu bilden, wobei jede Lage LA gemäß einer gewünschten, vorgegebenen Lagenordnung bzw. gemäß eines gewünschten, vorgegebenen Lagenbildes über die Transfereinheit 7 erzeugt wird.

Die Transfereinheit 7 weist ein an Maschinengestellteilen befestigtes führungsschienenartiges Querträgerelement 7.1 mit einer Hauptachse HA auf, das - in vertikaler Richtung gesehen - oberhalb des Gruppiertisches 4 auf einem vorgegebenen höheren Höhenniveau beabstandet zur Gruppierebene EG angeordnet ist, derart, dass die Hauptachse HA im Wesentlichen parallel zur Gruppierebene EG verläuft. Das Querträgerelement 7.1 erstreckt sich in Bezug auf die Förderrichtung FR, die in der Darstellung der Figuren 2 und 3 in die Papierebene hinein verläuft und nicht kenntlich gemacht ist, quer über den Gruppiertisch 4 und die beidseitig daran anschließenden Überschubbleche 10 sowie die jeweiligen, wiederum an die Überschubbleche 10 angrenzenden Reihenförderer 6, 6', wobei die Hauptachse HA des Querträgerelementes 7.1 im Wesentlichen senkrecht zur Förderrichtung FR orientiert ist.

An dem Querträgerelement 7.1 sind beweglich gelagerte, motorisch und pneumatisch angetriebene Schieberfunktionseinheiten 13, 14 vorgesehen. Dabei ist im Wesentlichen die erste Schieberfunktionseinheit 13 der ersten Seite 8 des Gruppiertisches 4 und die zweite Schieberfunktionseinheit 14 der zweiten Seite 9 des Gruppiertisches 4 zugeordnet. Jede Schieberfunktionseinheit 13, 14 weist jeweils ein Paar zusammenwirkender hub- und senkbeweglicher Schieberelemente 13.1, 13.2, 14.1, 14.2 auf. Beispielsweise wirken die jeweils ersten Schieberelemente 13.1, 14.1 auf jeder Seite 8, 9 als Schieber oder Drücker, die die Packmittel 2 bzw. die Packmittelvorgruppen G oder aus mehreren Packmittelvorgruppen G wiederum gebildeten größeren Paketen in der jeweiligen Schieberichtung SR1, SR2 schieben oder drücken. Die jeweils zweiten Schieberelemente 13.2, 14.2 auf jeder Seite 8, 9 wirken dabei als Anschlag oder Abholer oder Gegenhalter, die die entsprechenden durch die Schieber 13.1, 14.1 in Schieberichtung SR1, SR2 bewegten Packmittelvorgruppen G oder Pakete halten bzw. führen.

Jedes Schieberelement 13.1, 13.2, 14.1, 14.2 ist dabei einzeln und unabhängig angetrieben und zwar sowohl für die Hub-Senk-Bewegung in vertikaler Richtung als auch für die Verfahrbewegung in horizontaler Richtung. Jedes Schieberelement 13.1, 13.2, 14.1, 14.2 ist somit zumindest abschnittsweise entlang des Querträgerelementes 7.1 in Richtung der Hauptachse HA verfahrbar, und zwar in den jeweiligen Schieberichtungen SR1, SR2 und entgegengesetzt dazu. Dadurch sind die Schieberelemente 13.1, 13.2, 14.1, 14.2 jeweils über einen bestimmten Abschnitt, vorzugsweise über mindestens ein Viertel oder mindestens ein Drittel oder mindestens die Hälfte der Länge des Querträgerelementes 7.1 mittels lateraler Verfahrbewegung in horizontaler Richtung hin-und-her verfahrbar, insbesondere stufenlos.

Die Schieberelemente 13.1, 13.2, 14.1, 14.2 sind hierbei gesteuert bewegt, wobei die Anlage 1 eine (nicht in den Figuren gezeigte) Steuereinheit umfasst und die Bewegung der Schieberelemente 13.1, 13.2, 14.1, 14.2 mittels dieser Steuereinheit individuell gesteuert ist. Dabei ist jedes Schieberelement 13.1, 13.2, 14.1, 14.2 einzeln, individuell und unabhängig ansteuerbar, so dass sowohl die vertikale Hub-Senk-Bewegung wie auch die horizontale, laterale Verfahrbewegung bei jedem Schieberelement 13.1, 13.2, 14.1, 14.2 individuell unabhängig erfolgen kann. Im dargestellten Beispiel weist jedes Schieberelement 13.1, 13.2, 14.1, 14.2 einen eigenen motorischen Antrieb 15, insbesondere einen Servomotor auf, der über jeweilige Zahnriemen mit den Schieberelementen 13.1, 13.2, 14.1, 14.2 verbunden ist. Aus Figur 1 sind die den Schieberelementen 13.1, 13.2, 14.1, 14.2 einzeln zugeordneten vier Servomotoren 15 ersichtlich. In den Figuren 2 und 3 sind nur zwei zu sehen, die weiteren zwei sind in der Ansicht verdeckt. In den dargestellten Beispielen weist jedes Schieberelement 13.1, 13.2, 14.1, 14.2 ebenso einen eigenen, unabhängigen pneumatischen Antrieb für die vertikale Hub-Senk-Bewegung auf, und zwar in Form einer jeweiligen Pneumatikzylindereinheit bestehend aus jeweils zwei Zylindern 18a, 18b.

In der Darstellung der Figur 2 sind alle Schieberelemente 13.1, 13.2, 14.1, 14.2 in einer abgesenkten Position, in der sie die Packmittel 2 bzw. die Packmittelvorgruppen G oder Pakete in Eingriff nehmen können. Ebenso befinden sich die Schieberelemente 13.1, 13.2 der ersten Schieberfunktionseinheit 13 im Bereich oberhalb des Doppelreihenförderers 6 und diejenigen Schieberelemente 14.1, 14.2 der zweiten Schieberfunktionseinheit 14 im Bereich oberhalb des Doppelreihenförderers 6'. In dieser Position kann jede Schieberfunktionseinheit 13, 14 eine am jeweiligen Transferende der Doppelreihenförderer 6, 6' bereitgestellte Packmittelvorgruppe G "greifen" und überschieben.

In der Darstellung der Figur 3 sind die Schieberelemente 13.2 und 14.2 in einer angehobenen Position, in der sie sich oberhalb der Packmittel 2 bzw. der Packmittelvorgruppen G oder Pakete befinden und in der beispielsweise ein Zurückfahren zu den jeweiligen Seiten 8, 9 bzw. Doppelreihenförderern 6, 6' ungehindert während der Lagenbildung erfolgen kann, auch wenn sich eine in Entstehung befindliche Lage LA aus Packmitteln 2 auf dem Gruppiertisch 4 befindet. Die Schieberelemente 13.2, 14.2 befinden sich ebenso etwa im Bereich des Zentrums der Sammelzone des Gruppiertisches 4.

Ein als äußere Begrenzung dienendes Führungsmittel 16 in Form eines Außengeländers oder einer Führungsleiste ist bei der Packmittelzuführung 5 seitlich an den Doppelreihenförderern 6, 6' vorgesehen, welches mit einem heb- und senkbaren Innengeländer 17 zusammenwirkt, um die Reihen der Packmittel 2 während des Transports zu führen. Um auch beim Bilden der Lagen LA auf dem Gruppiertisch 4 die jeweils entstehende Lage LA unter Aufrechterhaltung des Lagenbildes bzw. der Lagenordnung zu stabilisieren sind weiterhin vordere und hintere, jeweils heb- und senkbare Lagenführungen vorgesehen, die eine Begrenzung der Sammelzone auf dem Gruppiertisch 4 bilden und die sich im Wesentlichen senkrecht zur Förderrichtung FR quer über den Gruppiertisch 4 erstrecken. Zum Überschieben der Packmittelvorgruppen G von den Doppelreihenförderern 6, 6' auf den Gruppiertisch 4 werden die heb- und senkbaren Innengeländer 17 abgesenkt, wie es in den Figuren 2 und 3 dargestellt ist. Beispielsweise während der Vorgruppierung einer Packmittelvorgruppe G am Transferende der Doppelreihenförderer 6, 6' sind die Innengeländer 17 in angehobener Stellung um einen seitlichen Anschlag zu bilden und eine versehentliche, zu früh erfolgende Packmittelbewegung in Schieberichtung S1, S2 zu verhindern. Auch das Absenken und Anheben der Innengeländer 17 und Lagenführungen erfolgt gesteuert.

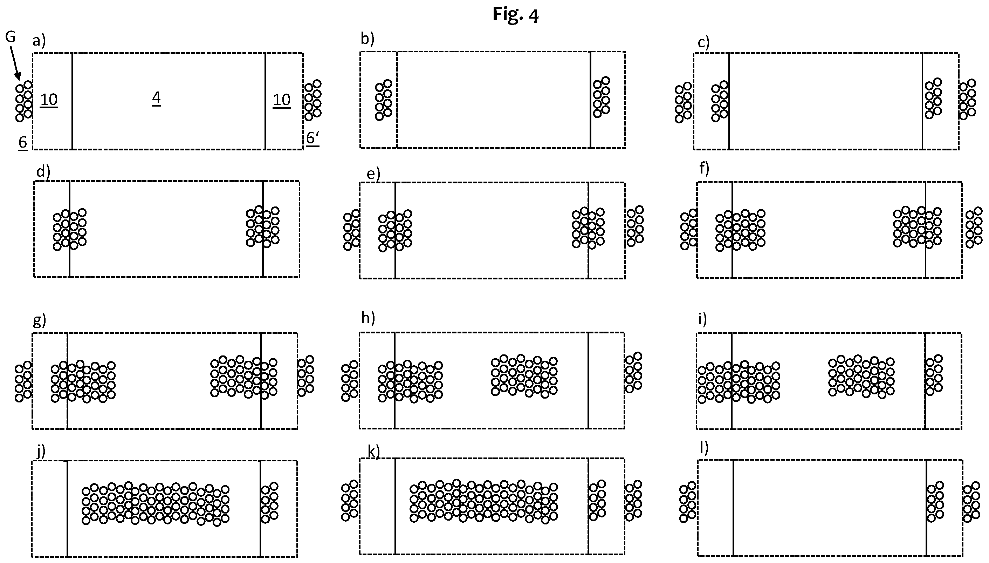

Die Funktion und Arbeitsweise der Schieberfunktionseinheiten 13, 14 bei der Lagenbildung kann im Folgenden mit Verweis auf die Figur 4 anhand eines speziellen Beispiels näher erläutert werden, wobei jede der Skizzen a) bis I) der Figur 4 eine stark vereinfachte Draufsicht auf den Gruppiertisch 4, die Überschubbleche 10 und die Doppelreihenförderer 6, 6' darstellt, von denen aus Gründen der Übersichtlichkeit nur Skizze a) mit Bezugszeichen versehen ist, für die weiteren Skizzen aber analog dazu dieselben Bezugszeichen zutreffen.

Die Skizzen a) bis I) der Figur 4 stellen einzelne Schritte der Lagenbildung dar, wobei der Einfachheit halber jede skizzierte Reihe einer Packmittelvorgruppe G, eines Pakets oder einer Lage LA jeweils nur vier Packmittel 2 enthält. Es versteht sich, dass die Reihen einer Lage LA in der Regel mehr als vier Packmittel umfassen und beispielsweise 10, 11 oder mehr Packmittel pro Reihe aufweisen.

In Skizze a), welche den Ausgangszustand bei Bildung einer neuen Lage LA darstellt, ist bereits jeweils eine Doppelreihe aus Packmitteln 2 am Transferende der Doppelreihenförderer 6, 6' eingelaufen und schon zu einer Packmittelvorgruppe G gruppiert. In dieser Position fahren die Schieberfunktionseinheiten 13, 14 links und rechts an die Packmittelvorgruppe G heran, die jeweiligen Schieberelemente 13.1, 13.2 "umgreifen" die entsprechende Packmittelvorgruppe G auf dem Doppelreihenförderer 6 und die jeweiligen Schieberelemente 14.1, 14.2 "umgreifen" die entsprechende Packmittelvorgruppe G auf dem Doppelreihenförderer 6'. Sobald die Schieberelemente 13.1, 13.2 und 14.1, 14.2 sicher in Position sind, werden die Innengeländer 17 abgesenkt, die Lagenführungen in Sperrstellung gebracht und jede Packmittelvorgruppe G wird auf den Überschubpufferbereich 10 aufgeschoben (Skizze b)), während bereits die nächsten Packmittelvorgruppen G an den Transferenden der Doppelreihenförderer 6, 6' gebildet werden und bereitstehen (Skizze c)). Nun führen die Schieberelemente 13.1, 13.2 und 14.1, 14.2 die an den Doppelreihenförderern 6, 6' bereitstehenden Packmittelvorgruppen G bis kurz vor dem Kontakt mit derjenigen jeweiligen Packmittelvorgruppe G auf dem Überschubpufferbereich 10 und die jeweils als "Abholer" dienende Schieberelemente 13.2, 14.2 werden angehoben und nach innen in Richtung zur Mitte des Gruppiertisches 4 verfahren um nunmehr ein aus zwei Packmittelvorgruppen G bestehendes Paket zu formen und weiter in Richtung der Sammelzone hineinzuschieben (Skizze d)).

Mit etwa dieser Abfolge werden die Pakete stets um neue Packmittelvorgruppen G, jeweils bestehend aus zwei Reihen, vergrößert und weiter in Richtung Sammelzone geschoben (Skizzen e) bis g)). Skizze h) zeigt einen Zustand, in dem das an der rechten Skizzenseite (die der zweiten Seite 9 des Gruppiertisches 4 entspricht) "wachsende" Paket, welches aus acht Doppelreihen besteht, bereits ins Zentrum der Sammelzone des Gruppiertisches 4 gefahren ist, während (wie in Skizze i)) gezeigt) linksseitig eine weitere Doppelreihe angefügt wird und rechtsseitig die erste schon zur nächsten Lage LA gehörige Packmittelvorgruppe G bereits auf dem Überschubpufferbereich 10 "zwischengepuffert" wird. In der Darstellung der Skizzen j) und k) ist die erste Lage LA mittig in der Sammelzone des Gruppiertisches 4 fertiggestellt, während die Packmittelvorgruppen G für die nächste Lage sukzessive auf die Überschubpufferbereiche 10 übergeschoben werden.

Die fertiggestellte Lage LA läuft geführt von den entsprechenden Lagenführungen aus (Skizze I)) und zwar in Förderrichtung FR zu dem der Gruppierstation 3 nachgeschalteten Lagenstapler 11 hin. Auch während dieser Zeit können auf den Überschubpufferbereichen 10 bereits die benötigten Pakete für die nächste Lage LA vorbereitet und gebildet werden, wodurch sowohl eine deutliche Zeiteinsparung sowie insbesondere ein verbesserter störungsfreier Ablauf bei der Lagenbildung erzielt werden kann. Da hierdurch die Zuführung und der Transport der Packmittel 2 im Wesentlichen kontinuierlich läuft, ist insbesondere die Abnahme der Packmittel 2 aus dem vorgeschalteten Massenstrom so gleichmäßig, dass Störungen vermieden werden können.

Die in Richtung des Lagenstaplers 11 ausgelaufene Lage LA, geht unter Beibehaltung der Lagenordnung an den Lagenstapler 11 über und wird hier zur Bildung der Transport- und Lagereinheit 100 auf eine in dem Lagenstapler 11 bereitgestellte Platte 110 übergeschoben. Dies erfolgt ebenfalls geführt und unter Beibehaltung der Lagenordnung bzw. des Lagenbildes, wobei das Aufschieben auf die Platte 110 beispielsweise durch eine käfig- oder rahmenartige Schiebe- und Führungseinheit erfolgt. Über Zentriereinheiten in der Anlage 1, beispielsweise im Bereich des Lagenstaplers 11 kann die erforderliche Position der Lage LA kontrolliert und korrigiert werden.

In dem Lagenstapler 11 ist eine Hubgabel vorhanden, die für jede fertiggestellte Lage LA eine jeweilige Platte 110 zur Aufnahme der Lage LA bereitstellt. Die Hubgabel ist dabei so ausgebildet, dass sie die zu beladende Platte 110 in der entsprechenden Höhe, nämlich vorzugsweise auf Höhe der Gruppierebene EG bereitstellt, so dass ein stufenloses Überschieben auf die Platte 110 möglich ist.

Eine aus mehreren Lagen bestehende, mehrlagige Transport- und Lagereinheit 100 wird beispielsweise dadurch gebildet, dass die Hubgabel die Transport- und Lagereinheit 100 absenkt und eine ebenso in der Anlage vorgesehene Umsetzvorrichtung eine neue Platte 110 oben auf die Lage LA aufsetzt. Mittels einer Höhenpositionierungseinrichtung wird sichergestellt dass die Oberseite der "neuen" auf der Lage aufliegenden Platte 110 nunmehr in der Gruppierebene EG des Gruppiertisches 4 ausgerichtet ist, so dass eine neue, in der Gruppiertation 3 zusammengestellte Lage LA aufgeschoben werden kann.

Die Erfindung wurde voranstehend an Ausführungsbeispielen beschrieben. Es versteht sich, dass eine Vielzahl von Änderungen oder Abwandlungen möglich sind, ohne dass dadurch der durch die Patentansprüche definierte Schutzbereich der Erfindung verlassen wird. Der Inhalt der Patentansprüche wird zum Gegenstand der Beschreibung erklärt.

### Bezugszeichenliste

- 1: Anlage
- 2: Packmittel
- 3: Gruppierstation
- 4: Gruppiertisch
- 5: Packmittelzuführung
- 6, 6': Reihenförderer
- 7: Transfereinheit
- 7.1: Qerträgerelement
- 8: erste Seite
- 9: zweite Seite
- 10: Überschubpufferbereich
- 11: Lagenstapler
- 12: Einteileinrichtung
- 13: erste Schieberfunktionseinheit
- 13.1, 13.2: Schieberelemente
- 14: zweite Schieberfunktionseinheit
- 14.1, 14.2: Schieberelemente
- 15: motorischer Antrieb
- 16: Führungsmittel
- 17: Innengeländer
- 18a, 18b: Pneumatikzylinder

- 100: Transport- und Lagereinheit
- 110: Platte

- EG: Gruppierebene
- FR: Förderrichtung
- HA: Hauptachse
- LA: Lagen
- SR1, SR2: Schieberichtung

## Patentansprüche

1. Anlage (1) zum Zusammenstellen von Lagen (LA) aus Packmitteln (2) sowie zur Bildung von Transport- und Lagereinheiten (100) aus zumindest einer dieser Lagen (LA), aufweisend zumindest eine Gruppierstation (3) mit wenigstens einem eine Gruppierebene (EG) aufweisenden Gruppiertisch (4) zum Anordnen und Gruppieren der Packmittel (2), und mit einer Packmittelzuführung (5) zum Zuführen der Packmittel (2) zu dem Gruppiertisch (4) in einer Förderrichtung (FR), wobei die Packmittelzuführung (5) zumindest zwei Reihenförderer (6, 6') zum Transportieren von jeweils mindestens einer Packmittelreihe umfasst, wobei die Reihenförderer (6, 6') in Förderrichtung (FR) beidseitig des Gruppiertisches (4) angeordnet sind und dem Gruppiertisch (4) die Packmittel (2) von sich gegenüberliegenden ersten und zweiten Seiten (8, 9) her zuführen, wobei die Gruppierstation (3) ferner eine Transfereinheit (7) für den Transfer der Packmittel (2) von den jeweiligen Reihenförderern (6, 6') zu dem Gruppiertisch (4) aufweist, wobei auf jeder Seite (8, 9) zwischen den jeweiligen Reihenförderern (6, 6') und dem Gruppiertisch (4) jeweils ein Überschubpufferbereich (10) vorgesehen ist, über den die Transfereinheit (7) die Packmittel (2) in einer jeweiligen Schieberichtung (SR1, SR2) vom jeweiligen Reihenförderer (6, 6') auf den Gruppiertisch (4) überschiebt um die eine vorgegebene Lagenordnung aufweisende Lage aus Packmitteln (2) zu bilden, wobei die Anlage (1) ferner zumindest einen Lagenstapler (11) aufweist, der die auf dem Gruppiertisch (4) gebildete zumindest eine Lage aus Packmitteln (2) unter Beibehaltung der Lagenordnung zur Bildung der Transport- und Lagereinheit auf eine in dem Lagenstapler (11) bereitgestellte Platte (110) überschiebt, **dadurch gekennzeichnet, dass** zumindest einer der Reihenförderer (6, 6') oder beide Reihenförderer (6, 6') in Form eines Doppelreihenförderers vorgesehen ist/sind, wobei jeder Doppelreihenförderer dazu ausgebildet ist die Packmittel in zwei nebeneinander laufenden Packmittelreihen in Förderrichtung (FR) zu transportieren und wobei die Reihenförderer (6, 6') parallel zueinander sowie parallel zur ersten und zweiten Seite (8, 9) des Gruppiertisches (4) angeordnet und ihrer Länge nach in Förderrichtung (FR) orientiert sind.

2. Anlage (1) nach Anspruch 1, **dadurch gekennzeichnet, dass** jeder Reihenförderer (6, 6') dazu ausgebildet ist, die in Förderrichtung (FR) transportierten Packmittel (2) auslaufseitig an einem zu dem Überschubpufferbereich (10) benachbarten Transferende zu einer Packmittelvorgruppe (G) zu gruppieren, wobei der Reihenförderer (6, 6') dazu eine Einteileinrichtung (12) zum Abteilen einer vorgegebenen, von der jeweiligen zu bildenden Lagenordnung abhängigen Anzahl der in Reihe hintereinander laufenden Packmittel (2) vom Packmittelstrom aufweist.

3. Anlage (1) nach Anspruch 2, **dadurch gekennzeichnet, dass** die Einteileinrichtung (12) ferner wenigstens ein Ausrichtemittel zur Reihenausrichtung aufweist, wobei die Einteileinrichtung (12) und das Ausrichtemittel dazu ausgebildet sind und derart zusammenwirken, um im Falle mehrerer im Reihenförderer (6, 6') nebeneinander laufender Packmittelreihen in Abhängigkeit von der jeweiligen zu bildenden Lagenordnung die Packmittelreihen in jeder Packmittelvorgruppe (G) versetzt zueinander anzuordnen.

4. Anlage (1) nach einem der vorhergehenden Ansprüche, **dadurch gekennzeichnet, dass** die Transfereinheit (7) ein führungsschienenartiges Querträgerelement (7.1) aufweist, das oberhalb der Gruppierebene (EG) beabstandet zu dieser angeordnet ist und sich in Bezug auf die Förderrichtung (FR) quer über den Gruppiertisch (4) erstreckt, wobei wenigstens eine an dem Querträgerelement (7.1) beweglich gelagerte und erste antreibbare Schieberfunktionseinheit (13) sowie eine an dem Querträgerelement (7.1) beweglich gelagerte zweite antreibbare Schieberfunktionseinheit (14) vorgesehen sind.

5. Anlage (1) nach Anspruch 4, **dadurch gekennzeichnet, dass** jede Schieberfunktionseinheit (13, 14) jeweils zumindest ein Paar zusammenwirkender hub- und senkbeweglicher Schieberelemente (13.1, 13.2, 14.1, 14.2) aufweist, wobei jedes hub- und senkbewegliche Schieberelement (13.1, 13.2, 14.1, 14.2) angetrieben und auch in jeweiligen Schieberichtungen (SR1, SR2) entlang des Querträgerelementes (7.1) verfahrbar ist.

6. Anlage (1) nach Anspruch 5, **dadurch gekennzeichnet, dass** jedes der Schieberelemente (13.1, 13.2, 14.1, 14.2) einzeln und unabhängig angetrieben ist, wobei jedes Schieberelement (13.1, 13.2, 14.1, 14.2) sowohl mittels Hub-Senk-Bewegung in vertikaler Richtung wie auch mittels lateraler Verfahrbewegung in horizontaler Richtung einzeln und unabhängig bewegbar ist.

7. Anlage (1) nach Anspruch 5 oder 6, **dadurch gekennzeichnet, dass** die Schieberelemente (13.1, 13.2, 14.1, 14.2) gesteuert bewegbar sind, wobei die Anlage eine Steuereinheit umfasst und die Bewegung der einzelnen Schieberelemente (13.1, 13.2, 14.1, 14.2) mittels der Steuereinheit individuell gesteuert ist.

8. Anlage (1) nach einem der Ansprüche 5 bis 7, **dadurch gekennzeichnet, dass** jedes der Schieberelemente (13.1, 13.2, 14.1, 14.2) einen eigenen motorischen und/oder pneumatischen Antrieb aufweist, wobei der motorische Antrieb insbesondere durch einen Servomotor gebildet ist.

9. Anlage (1) nach einem der vorhergehenden Ansprüche, **dadurch gekennzeichnet, dass** der Überschubpufferbereich (10) durch ein Überschubblech mit einer ebenen und glatten Oberseite gebildet ist, wobei die Oberseite des Überschubbleches eine mit der Gruppierebene (EG) des Gruppiertisches (4) zusammenfallende Schiebeebene (ES) definiert.

10. Anlage (1) nach einem der vorhergehenden Ansprüche, **dadurch gekennzeichnet, dass** Führungs- und Überschubmittel für den Überschub der vollständigen Lage vom Gruppiertisch (4) auf die in dem Lagenstapler (11) bereitgestellte Platte (110) vorgesehen sind, wobei die Führungs- und Überschubmittel insbesondere käfig- oder rahmenartige Führungen aufweisen, die zur Sicherung der Lagenordnung während des Überschubs ausgebildet sind und eine vollständige Lage von oben her sichernd in Eingriff nehmen.

11. Anlage (1) nach einem der vorhergehenden Ansprüche, **dadurch gekennzeichnet, dass** der Lagenstapler (11) eine Hubgabel aufweist, welche die jeweilige Platte (110) zur Aufnahme der Lage (LA) und damit zur Bildung der Transport- und Lagereinheit (100) bereitstellt.

12. Anlage (1) nach Anspruch 11, **dadurch gekennzeichnet, dass** der Lagenstapler (11) eine Höhenpositionierungseinrichtung zur exakten Höhenpositionierung der bereitgestellten Platte (110) umfasst, wobei die Höhenpositionierungseinrichtung sicherstellt dass eine Oberseite der Platte in der Gruppierebene (EG) des Gruppiertisches (4) ausgerichtet ist.

13. Anlage (1) nach einem der vorhergehenden Ansprüche, **dadurch gekennzeichnet, dass** im Bereich des Lagenstaplers (11) eine Zentriervorrichtung zur Zentrierung und exakten horizontalen Positionierung der bereitgestellten Platte (110) vorgesehen ist.

14. Anlage (1) nach einem der vorhergehenden Ansprüche, **dadurch gekennzeichnet, dass** der Lagenstapler (11) eine Umsetzvorrichtung für die Platten (110) aufweist.

15. Anlage (1) nach Anspruch 14, **dadurch gekennzeichnet, dass** die Umsetzvorrichtung dazu ausgebildet ist, eine Platte (110) von einem dem Lagenstapler (11) zugeordneten Stapel von Platten (110) aufzunehmen und oberseitig auf einer Lage (LA) einer im Lagenstapler (11) in Bildung befindlichen Transport- und Lagereinheit (100) abzusetzen und/oder dass die Umsetzvorrichtung dazu ausgebildet ist, eine Platte (110) von einer Lage (LA) einer im Lagenstapler (11) befindlichen Transport- und Lagereinheit (100) aufzunehmen und auf eine dem Lagenstapler (11) zugeordnete Palette oder einem dem Lagenstapler (11) zugeordneten Stapel von Platten (110) abzusetzen.

16. Verfahren zum Zusammenstellen von Lagen (LA) aus Packmitteln (2) sowie zur Bildung von Transport- und Lagereinheiten (100) aus zumindest einer dieser Lagen (LA), bei dem in einer Gruppierstation (3) einer Anlage (1) auf einem eine Gruppierebene (EG) aufweisenden Gruppiertisch (4) Packmittel (2) angeordnet und gruppiert werden, wobei die Packmittel (2) mittels einer Packmittelzuführung (5) in einer Förderrichtung (FR) zu dem Gruppiertisch (4) gefördert werden, wobei die Packmittelzuführung (5) zwei beidseitig des Gruppiertisches (4) angeordnete Reihenförderer (6, 6') zum Transportieren von jeweils mindestens einer Packmittelreihe umfasst, wobei zumindest einer der Reihenförderer (6, 6') oder beide Reihenförderer (6, 6') in Form eines Doppelreihenförderers vorgesehen ist/sind, wobei die Packmittel (6, 6') von dem Doppelreihenförderer in zwei nebeneinander laufenden Packmittelreihen in Förderrichtung (FR) transportiert werden, wobei die Reihenförderer (6, 6') parallel zueinander sowie parallel zur ersten und zweiten Seite (8, 9) des Gruppiertisches (4) angeordnet und ihrer Länge nach in Förderrichtung (FR) orientiert sind und die Packmittel (2) dem Gruppiertisch (4) von sich gegenüberliegenden ersten und zweiten Seiten (8, 9) her zugeführt werden, wobei die Packmittel (2) mittels einer vorgesehenen Transfereinheit (7) von den jeweiligen Reihenförderern (6, 6') über jeweils zwischen den Reihenförderern (6, 6') und dem Gruppiertisch (4) vorgesehene Überschubpufferbereiche (10) auf den Gruppiertisch (4) übergeschoben werden um die eine vorgegebene Lagenordnung aufweisende Lage aus Packmitteln (2) zu bilden, und wobei die vollständige Lage aus Packmitteln (2) unter Beibehaltung der Lagenordnung zur Bildung der Transport- und Lagereinheit auf eine in einem vorgesehenen Lagenstapler (11) bereitgestellte Platte (110) übergeschoben wird.

17. Verfahren nach Anspruch 16, **dadurch gekennzeichnet, dass** die Packmittel (2) einer jeweiligen zu bildenden Lage (LA) sukzessive und gruppenweise in mehreren Transferschritten von den Reihenförderern (6, 6') auf den Gruppiertisch (4) übergeschoben werden, und zwar in gesteuerter Weise.

18. Verfahren nach Anspruch 17, **dadurch gekennzeichnet, dass** die Packmittel (2) durch mehrere individuell und einzeln angesteuerte sowie individuell und einzeln angetriebene Schieberelemente (13.1, 13.2, 14.1, 14.2) von den Reihenförderern (6, 6') auf den Gruppiertisch (4) übergeschoben werden.

19. Verfahren nach einem der Ansprüche 16 bis 18, **dadurch gekennzeichnet, dass** die Packmittel (2) dem Gruppiertisch (4) symmetrisch zugeführt werden, wobei die Packmittel (2) an jeder Seite (8, 9) als Doppelreihe zugeführt werden.

20. Verfahren nach Anspruch 19, **dadurch gekennzeichnet, dass** die Packmittel (2) an einem dem Gruppiertisch (4) zugewandten Transferende der Reihenförderer (6, 6') zu einer Packmittelvorgruppe (G) vorgruppiert werden.

21. Verfahren nach einem der vorhergehenden Ansprüche 16 bis 20, **dadurch gekennzeichnet, dass** bereits während der Fertigstellung der vollständigen Lage (LA) auf dem Gruppiertisch (4) die Packmittel (2) für eine weitere, neue Lage (LA) in die jeweiligen Überschubpufferbereiche (10) übergeschoben und vorzugsweise zu Teillagen zusammengestellt werden.

## Claims

1. System (1) for assembling layers (LA) of packaging means (2) and for forming transport and storage units (100) from at least one of said layers (LA), having at least one grouping station (3) with at least one grouping table (4) having a grouping plane (EG) for arranging and grouping the packaging means (2), and with a packaging-means feed (5) for feeding the packaging means (2) to the grouping table (4) in a conveying direction (FR), wherein the packaging-means feed (5) comprises at least two row conveyors (6, 6') for transporting at least one row of packaging means each, wherein the row conveyors (6, 6') are arranged in the conveying direction (FR) on either side of the grouping table (4) and feed the packaging means (2) to the grouping table (4) from opposite first and second sides (8, 9), wherein the grouping station (3) also has a transfer unit (7) for transferring the packaging means (2) from the row conveyors (6, 6') to the grouping table (4), wherein, on each side (8, 9) between the respective row conveyors (6, 6') and the grouping table (4) there is provided a slide-over buffer region (10) via which the transfer unit (7) slides the packaging means (2) over from the row conveyor (6, 6') in question onto the grouping table (4) in a respective sliding direction (SR1, SR2) in order to form the layer of packaging means (2) having a predetermined layer arrangement, wherein the system (1) further comprises at least one layer stacker (11) which slides over the at least one layer of packaging means (2) formed on the grouping table (4) onto a plate (110) provided in the layer stacker (11), while maintaining the layer arrangement, in order to form the transport and storage unit, **characterised in that** at least one of the row conveyors (6, 6') or both row conveyors (6, 6') is/are provided in the form of a double-row conveyor, wherein each double-row conveyor is configured to transport the packaging means in two rows running side by side in the conveying direction (FR), and wherein the row conveyors (6, 6') are arranged parallel to one another and parallel to the first and second sides (8, 9) of the grouping table (4), and are oriented along their length in the conveying direction (FR).

2. System (1) according to claim 1, **characterised in that** each row conveyor (6, 6') is configured to group the packaging means (2) transported in the conveying direction (FR) on the runout side at a transfer end adjacent to the slide-over buffer region (10) into a packaging means pre-group (G), wherein the row conveyor (6, 6') comprises, for this purpose, a sorting device (12) for separating a predetermined number of the packaging means (2) travelling in series from the stream of packaging means, said number depending on the respective layer arrangement to be formed.

3. System (1) according to claim 2, **characterised in that** the sorting device (12) further comprises at least one alignment means for row alignment, wherein, in the case of a plurality of rows of packaging means running side by side in the row conveyor (6, 6'), depending on the respective layer arrangement to be formed, the sorting device (12) and the alignment means are configured and interact so as to arrange the rows of packaging means in each packaging means sub-group (G) in an offset manner relative to one another.

4. System (1) according to any of the preceding claims, **characterised in that** the transfer unit (7) comprises a guide-rail-like cross-member element (7.1) which is arranged above the grouping plane (EG) at a distance therefrom and extends transversely across the grouping table (4) relative to the conveying direction (FR), wherein at least one first driveable slide function unit (13) movably mounted on the cross-member element (7.1) and a second driveable slide function unit (14) movably mounted on the cross-member element (7.1) are provided.

5. System (1) according to claim 4, **characterised in that** each slide function unit (13, 14) comprises at least one pair of interacting, liftable and lowerable slide elements (13.1, 13.2, 14.1, 14.2), wherein each liftable and lowerable slide element (13.1, 13.2, 14.1, 14.2) is driven and can also be moved in respective sliding directions (SR1, SR2) along the cross-member element (7.1).

6. System (1) according to claim 5, **characterised in that** each of the slide elements (13.1, 13.2, 14.1, 14.2) is driven individually and independently, wherein each slide element (13.1, 13.2, 14.1, 14.2) is movable individually and independently both by means of a lifting and lowering movement in the vertical direction and by means of a lateral travel movement in the horizontal direction.

7. System (1) according to claim 5 or 6, **characterised in that** the slide elements (13.1, 13.2, 14.1, 14.2) are movable in a controlled manner, wherein the system comprises a control unit and the movement of the individual slide elements (13.1, 13.2, 14.1, 14.2) is individually controlled by means of the control unit.

8. System (1) according to any of claims 5 to 7, **characterised in that** each of the slide elements (13.1, 13.2, 14.1, 14.2) has its own motorised and/or pneumatic drive, wherein the motorised drive is in particular formed by a servomotor.

9. System (1) according to any of the preceding claims, **characterised in that** the slide-over buffer region (10) is formed by a slide-over plate with a flat and smooth upper side, wherein the upper side of the slide-over plate defines a sliding plane (ES) which coincides with the grouping plane (EG) of the grouping table (4).

10. System (1) according to any of the preceding claims, **characterised in that** guiding and slide-over means are provided for sliding the complete layer over from the grouping table (4) onto the plate (110) provided in the layer stacker (11), wherein the guiding and slide-over means comprise, in particular, cage- or frame-like guides which are configured to secure the layer arrangement during the slide-over process and engage securely with a complete layer from above.

11. System (1) according to any of the preceding claims, **characterised in that** the layer stacker (11) comprises a lifting fork which positions the respective plate (110) to receive the layer (LA) and thereby form the transport and storage unit (100).

12. System (1) according to claim 11, **characterised in that** the layer stacker (11) comprises a height positioning device for the precise height positioning of the provided plate (110), wherein the height positioning device ensures that an upper side of the plate is aligned in the grouping plane (EG) of the grouping table (4).

13. System (1) according to any of the preceding claims, **characterised in that** a centring device is provided in the region of the layer stacker (11) for the centring and precise horizontal positioning of the provided plate (110).

14. System (1) according to any of the preceding claims, **characterised in that** the layer stacker (11) has a relocation device for the plates (110).

15. System (1) according to claim 14, **characterised in that** the relocation device is configured to pick up a plate (110) from a stack of plates (110) assigned to the layer stacker (11) and set it down on top of a layer (LA) of a transport and storage unit (100) being formed in the layer stacker (11), and/or that the relocation device is configured to pick up a plate (110) from a layer (LA) of a transport and storage unit (100) located in the layer stacker (11) and set it down on a pallet assigned to the layer stacker (11) or on a stack of plates (110) assigned to the layer stacker (11).

16. Method for assembling layers (LA) of packaging means (2) and for forming transport and storage units (100) from at least one of said layers (LA), wherein packaging means (2) are arranged and grouped in a grouping station (3) of a system (1) on a grouping table (4) having a grouping plane (EG), wherein the packaging means (2) are conveyed by means of a packaging-means feed (5) to the grouping table (4) in a conveying direction (FR), wherein the packaging-means feed (5) comprises two row conveyors (6, 6') arranged on either side of the grouping table (4) for transporting at least one row of packaging means each, wherein at least one of the row conveyors (6, 6') or both row conveyors (6, 6') is/are provided in the form of a double-row conveyor, wherein the packaging means (6, 6') are transported by the double-row conveyor in two rows of packaging means running side by side in the conveying direction (FR), wherein the row conveyors (6, 6') are arranged parallel to one another and parallel to the first and second sides (8, 9) of the grouping table (4) and are oriented along their length in the conveying direction (FR) and the packaging means (2) are fed to the grouping table (4) from opposite first and second sides (8, 9), wherein the packaging means (2) are slid over by means of a provided transfer unit (7) from the respective row conveyors (6, 6') via slide-over buffer regions (10) provided between the row conveyors (6, 6') and the grouping table (4) onto the grouping table (4) in order to form the layer of packaging means (2) having a predetermined layer arrangement, and wherein the complete layer of packaging means (2) is slid over onto a plate (110) provided in a layer stacker (11) to form the transport and storage unit, while maintaining the layer arrangement.

17. Method according to claim 16, **characterised in that** the packaging means (2) of a respective layer (LA) to be formed are slid over successively and in groups in a plurality of transfer steps from the row conveyors (6, 6') onto the grouping table (4) in a controlled manner.

18. Method according to claim 17, **characterised in that** the packaging means (2) are slid over from the row conveyors (6, 6') onto the grouping table (4) by means of a plurality of individually and separately controlled and individually and separately driven slide elements (13.1, 13.2, 14.1, 14.2).

19. Method according to any of claims 16 to 18, **characterised in that** the packaging means (2) are fed symmetrically to the grouping table (4), the packaging means (2) being fed in a double row on each side (8, 9).

20. Method according to claim 19, **characterised in that** the packaging means (2) are pre-grouped into a packaging means pre-group (G) at a transfer end of the row conveyors (6, 6') facing the grouping table (4).

21. Method according to any of the preceding claims 16 to 20, **characterised in that**, while the complete layer (LA) is still in the process of completion on the grouping table (4), the packaging means (2) for a further, new layer (LA) are slid over into the respective slide-over buffer regions (10) and preferably assembled into partial layers.

## Revendications

1. Installation (1) d'assemblage de couches (LA) de moyens d'emballage (2) ainsi que de formation d'unités de transport et de stockage (100) à partir d'au moins une de ces couches (LA), présentant au moins une station de regroupement (3) avec au moins une table de regroupement (4) présentant un plan de regroupement (EG) pour disposer et regrouper les moyens d'emballage (2), et avec une alimentation en moyens d'emballage (5) pour amener les moyens d'emballage (2) à la table de regroupement (4) dans une direction de convoyage (FR), dans laquelle l'alimentation en moyens d'emballage (5) comprend au moins deux convoyeurs de rangée (6, 6') pour le transport de respectivement au moins une rangée de moyens d'emballage, dans laquelle les convoyeurs de rangée (6, 6') sont disposés des deux côtés de la table de regroupement (4) dans la direction de convoyage (FR) et amènent les moyens d'emballage (2) à la table de regroupement (4) à partir des premier et second côtés (8, 9) opposés, dans laquelle la station de regroupement (3) présente en outre une unité de transfert (7) pour le transfert des moyens d'emballage (2) à partir des convoyeurs de rangée (6, 6') respectifs vers la table de regroupement (4), dans laquelle respectivement une zone tampon de poussée (10) est prévue de chaque côté (8, 9) entre les convoyeurs de rangée (6, 6') respectifs et la table de regroupement (4), par l'intermédiaire de laquelle l'unité de transfert (7) pousse les moyens d'emballage (2) dans une direction de poussée (SR1, SR2) respective à partir du convoyeur de rangée (6, 6') respectif sur la table de regroupement (4) afin de former la couche de moyens d'emballage (2) présentant un ordre de couches prédéfini, dans laquelle l'installation (1) présente en outre au moins un empileur de couches (11), qui pousse l'au moins une couche de moyens d'emballage (2) formée sur la table de regroupement (4), en maintenant l'ordre de couches pour la formation de l'unité de transport et de stockage, sur une plaque (110) mise à disposition dans l'empileur de couches (11), **caractérisée en ce qu'**au moins l'un des convoyeurs de rangée (6, 6') ou les deux convoyeurs de rangée (6, 6') est/sont prévu(s) sous la forme d'un convoyeur de double rangée, dans laquelle chaque convoyeur de double rangée est réalisé pour transporter les moyens d'emballage en deux rangées de moyens d'emballage circulant côte à côte dans la direction de convoyage (FR) et dans laquelle les convoyeurs de rangée (6, 6') sont disposés parallèlement l'un à l'autre ainsi que parallèlement au premier et au second côté (8, 9) de la table de regroupement (4) et orientés selon leur longueur dans la direction de convoyage (FR).

2. Installation (1) selon la revendication 1, **caractérisée en ce que** chaque convoyeur de rangée (6, 6') est réalisé pour regrouper les moyens d'emballage (2) transportés dans la direction de convoyage (FR) côté sortie au niveau d'une extrémité de transfert adjacente à la zone tampon de poussée (10) en un prégroupe de moyens d'emballage (G), dans laquelle le convoyeur de rangée (6, 6') présente à cet effet un dispositif de division (12) pour diviser un nombre prédéfini, dépendant de l'ordre de couches respectif à former, de moyens d'emballage (2) du flux de moyens d'emballage circulant les uns derrière les autres en rangée.

3. Installation (1) selon la revendication 2, **caractérisée en ce que** le dispositif de division (12) présente en outre au moins un moyen d'alignement pour l'alignement de rangées, dans laquelle le dispositif de division (12) et le moyen d'alignement sont réalisés et coopèrent de manière à disposer les rangées de moyens d'emballage décalées les unes par rapport aux autres dans chaque prégroupe de moyens d'emballage (G) dans le cas de plusieurs rangées de moyens d'emballage circulant côte à côte dans le convoyeur de rangée (6, 6') en fonction de l'ordre de couches respectives à former.

4. Installation (1) selon l'une quelconque des revendications précédentes, **caractérisée en ce que** l'unité de transfert (7) présente un élément de traverse (7.1) de type rail de guidage qui est disposé au-dessus du plan de regroupement (EG) à distance de celui-ci et s'étend transversalement par rapport à la direction de convoyage (FR) sur la table de regroupement (4), dans laquelle au moins une première unité fonctionnelle coulissante (13) montée mobile sur l'élément de traverse (7.1) et pouvant être entraînée ainsi qu'une seconde unité fonctionnelle coulissante (14) pouvant être entraînée montée mobile sur l'élément de traverse (7.1) sont prévues.

5. Installation (1) selon la revendication 4, **caractérisée en ce que** chaque unité fonctionnelle coulissante (13, 14) présente respectivement au moins une paire d'éléments coulissants (13.1, 13.2, 14.1, 14.2) en coopération, mobiles vers le haut et vers le bas, dans laquelle chaque élément coulissant (13.1, 13.2, 14.1, 14.2) mobile vers le haut et vers le bas est entraîné et peut également être déplacé dans les directions de poussée (SR1, SR2) respectives le long de l'élément de traverse (7.1).

6. Installation (1) selon la revendication 5, **caractérisée en ce que** chacun des éléments coulissants (13.1, 13.2, 14.1, 14.2) est entraîné séparément et indépendamment, dans laquelle chaque élément coulissant (13.1, 13.2, 14.1, 14.2) peut être mis en mouvement séparément et indépendamment aussi bien par un mouvement de levage-abaissement dans la direction verticale que par un mouvement de déplacement latéral dans la direction horizontale.

7. Installation (1) selon la revendication 5 ou 6, **caractérisée en ce que** les éléments coulissants (13.1, 13.2, 14.1, 14.2) sont mobiles de façon commandée, dans laquelle l'installation comprend une unité de commande et le mouvement des différents éléments coulissants (13.1, 13.2, 14.1, 14.2) est commandé individuellement au moyen de l'unité de commande.

8. Installation (1) selon l'une quelconque des revendications 5 à 7, **caractérisée en ce que** chacun des éléments coulissants (13.1, 13.2, 14.1, 14.2) présente son propre entraînement motorisé et/ou pneumatique, dans laquelle l'entraînement motorisé est notamment formé par un servomoteur.

9. Installation (1) selon l'une quelconque des revendications précédentes, **caractérisée en ce que** la zone tampon de poussée (10) est formée par une tôle de poussée avec une face supérieure plane et lisse, dans laquelle la face supérieure de la tôle de poussée définit un plan de poussée (ES) coïncidant avec le plan de regroupement (EG) de la table de regroupement (4).

10. Installation (1) selon l'une quelconque des revendications précédentes, **caractérisée en ce que** des moyens de guidage et de poussée sont prévus pour la poussée de la couche complète à partir de la table de regroupement (4) sur la plaque (110) mise à disposition dans l'empileur de couches (11), dans laquelle les moyens de guidage et de poussée présentent notamment des guidages en forme de cage ou de cadre, qui sont réalisés pour bloquer l'ordre des couches pendant la poussée et entrent en contact avec une couche complète par le haut avec blocage.

11. Installation (1) selon l'une quelconque des revendications précédentes, **caractérisée en ce que** l'empileur de couches (11) présente une fourche de levage qui met à disposition la plaque (110) respective pour la réception de la couche (LA) et donc pour la formation de l'unité de transport et de stockage (100).

12. Installation (1) selon la revendication 11, **caractérisée en ce que** l'empileur de couches (11) comprend un dispositif de positionnement en hauteur pour le positionnement exact en hauteur de la plaque (110) mise à disposition, dans laquelle le dispositif de positionnement en hauteur assure qu'une face supérieure de la plaque est alignée dans le plan de regroupement (EG) de la table de regroupement (4).

13. Installation (1) selon l'une quelconque des revendications précédentes, **caractérisée en ce qu'**un dispositif de centrage est prévu dans la zone de l'empileur de couches (11) pour le centrage et le positionnement horizontal exact de la plaque (110) mise à disposition.

14. Installation (1) selon l'une quelconque des revendications précédentes, **caractérisée en ce que** l'empileur de couches (11) présente un dispositif de changement de place pour les plaques (110).

15. Installation (1) selon la revendication 14, **caractérisée en ce que** le dispositif de changement de place est réalisé pour recevoir une plaque (110) d'une pile de plaques (110) attribuée à l'empileur de couches (11) et pour la déposer sur le dessus d'une couche (LA) d'une unité de transport et de stockage (100) se trouvant dans l'empileur de couches (11) lors de la formation et/ou que le dispositif de changement de place est réalisé pour recevoir une plaque (110) d'une couche (LA) d'une unité de transport et de stockage (100) se trouvant dans l'empileur de couches (11) et pour la déposer sur une palette attribuée à l'empileur de couches (11) ou sur une pile de plaques (110) attribuée à l'empileur de couches (11).

16. Procédé d'assemblage de couches (LA) de moyens d'emballage (2) ainsi que de formation d'unités de transport et de stockage (100) à partir d'au moins l'une de ces couches (LA), selon lequel des moyens d'emballage (2) sont disposés et regroupés dans une station de regroupement (3) d'une installation (1) sur une table de regroupement (4) présentant un plan de regroupement (EG), dans lequel les moyens d'emballage (2) sont convoyés vers la table de regroupement (4) au moyen d'une alimentation en moyens d'emballage (5) dans une direction de convoyage (FR), dans lequel l'alimentation en moyens d'emballage (5) comprend deux convoyeurs de rangée (6, 6') disposés des deux côtés de la table de regroupement (4) pour le transport de respectivement au moins une rangée de moyens d'emballage, dans lequel au moins l'un des convoyeurs de rangée (6, 6') ou les deux convoyeurs de rangée (6, 6') est/sont prévus sous la forme d'un convoyeur de double rangée, dans lequel les moyens d'emballage (6, 6') sont transportés par le convoyeur de double rangée en deux rangées de moyens d'emballage circulant côte à côte dans la direction de convoyage (FR), dans lequel les convoyeurs de rangée (6, 6') sont disposés parallèlement les uns aux autres ainsi que parallèlement aux premier et second côtés (8, 9) de la table de regroupement (4) et orientés selon leur longueur dans la direction de convoyage (FR) et les moyens d'emballage (2) sont amenés à la table de regroupement (4) par les premier et second côtés (8, 9) opposés, dans lequel les moyens d'emballage (2) sont poussés au moyen d'une unité de transfert (7) prévue par les convoyeurs de rangée (6, 6') respectifs par l'intermédiaire de zones tampons de poussée (10) prévues respectivement entre les convoyeurs de rangée (6, 6') et la table de regroupement (4) sur la table de regroupement (4) pour former la couche de moyens d'emballage (2) présentant un ordre de couches prédéfini, et dans lequel la couche complète de moyens d'emballage (2) est poussée sur une plaque (110) mise à disposition dans un empileur de couches (11) prévu en maintenant l'ordre de couches pour la formation de l'unité de transport et de stockage.

17. Procédé selon la revendication 16, **caractérisé en ce que** les moyens d'emballage (2) d'une couche (LA) à former respective sont poussés successivement et par groupes en plusieurs étapes de transfert à partir des convoyeurs de rangée (6, 6') sur la table de regroupement (4), et ce, de manière commandée.

18. Procédé selon la revendication 17, **caractérisé en ce que** les moyens d'emballage (2) sont poussés à partir des convoyeurs de rangée (6, 6') sur la table de regroupement (4) par plusieurs éléments coulissants (13.1, 13.2, 14.1, 14.2) commandés individuellement et séparément et entraînés individuellement et séparément.

19. Procédé selon l'une quelconque des revendications 16 à 18, **caractérisé en ce que** les moyens d'emballage (2) sont amenés symétriquement à la table de regroupement (4), dans lequel les moyens d'emballage (2) sont amenés de chaque côté (8, 9) en double rangée.

20. Procédé selon la revendication 19, **caractérisé en ce que** les moyens d'emballage (2) sont prégroupés en un prégroupe de moyens d'emballage (G) à une extrémité de transfert des convoyeurs de rangée (6, 6') orientée vers la table de regroupement (4).

21. Procédé selon l'une quelconque des revendications précédentes 16 à 20, **caractérisé en ce que** les moyens d'emballage (2) sont déjà poussés dans les zones tampons de poussée (10) respectives pendant la réalisation de la couche complète (LA) sur la table de regroupement (4) pour une autre nouvelle couche (LA) et de préférence assemblés en couches partielles.
